# EUROPÄISCHE PATENTANMELDUNG

(11) **EP 3 024 102 A1**
(43) Veröffentlichungstag der Anmeldung: **25.05.2016**
(21) Anmeldenummer: 15194117.6
(22) Anmeldetag: 11.11.2015
(51) Int. Cl.: H02G 3/04, F16L 11/18

(54) **FLEXIBLES SCHUTZROHR**

(30) Priorität: 18.11.2014 DE 102014116843; 09.01.2015 DE 202015100087 U
(71) Anmelder: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Nunnenkamp, Jörg

(57) **Zusammenfassung**

Gegenstand der Erfindung ist ein flexibles Schutzrohr, insbesondere Kabelschutzrohr, mit mehreren ineinandergesteckten Rohrsegmenten (1), wobei die Rohrsegmente (1) zueinander axial längenveränderlich und/oder tangential winkelveränderbar ausgebildet sind. Jedes Rohrsegment (1) weist ferner einen Umfangswulst (3) sowie einen Anschlag (5) auf. Die Umfangswulst (3) des jeweiligen Rohrsegmentes (1) setzt sich aus mehreren Haken (4) zusammen, welche den Anschlag (5) am benachbarten Rohrsegment (1) übergreifen. Erfindungsgemäß ist der betreffende Haken (4) mit einem Hinterschnitt (β) für den darin eingreifenden Anschlag (5) ausgerüstet ist.

## Beschreibung

Die Erfindung betrifft ein flexibles Schutzrohr, insbesondere Kabelschutzrohr, mit mehreren ineinandergesteckten Rohrsegmenten, wobei die Rohrsegmente zueinander axial längenveränderlich und/oder tangential winkelveränderbar ausgebildet sind, wobei ferner jedes Rohrsegment einen Umfangswulst sowie einen Anschlag aufweist, und wobei sich der Umfangswulst des jeweiligen Rohrsegmentes aus mehreren Haken zusammensetzt, welche einen Anschlag am benachbarten Rohrsegment in zusammengestecktem Zustand beider Rohrsegmente übergreifen.

Schutzrohre und insbesondere Kabelschutzrohre dienen typischerweise dazu, in ihrem Innern elektrische Leitungen, Glasfaserleitungen, Telekommunikationsleitungen etc. aufzunehmen. Mit Hilfe des Schutzrohres bzw. Kabelschutzrohres werden die fraglichen Leitungen vor Beschädigungen geschützt. Dazu erfolgt ergänzend meistens eine Erdverlegung der fraglichen Schutzrohre bzw. Kabelschutzrohre.

Im Rahmen der EP 2 477 289 A1 wird ein Kabelschutzrohr bzw. Kabelführungsrohr der Anmelderin im Detail beschrieben. Neben solchen starren bzw. gleichsam starren und bekannten Schutzrohren und insbesondere Kabelschutzrohren existieren im Stand der Technik auch flexible Varianten, wie sie beispielsweise im Rahmen der EP 0 197 046 B1 beschrieben werden. Einschlägig ist auch die Schutzummantelung für Kabel oder Leitungen entsprechend der DE 699 11 119 T2.

Dabei wird überwiegend so vorgegangen, dass der Umfangswulst eines Rohrsegmentes in eine Umfangsnut des benachbarten Rohrsegmentes eingreift und hierbei den Anschlag des benachbarten Rohrsegmentes übergreift. Je nach der Ausprägung des Umfangswulstes sowie der Umfangsnut ergibt sich auf diese Weise ein axiales Spiel der beiden Rohrsegmente zueinander. Das heißt, die Rohrsegmente sind zueinander längenveränderlich ausgebildet. Darüber hinaus können die beiden Rohrsegmente im Regelfall tangential winkelveränderbar zueinander ausgerichtet werden. Dabei haben sich Winkel zwischen den einzelnen Rohrsegmenten im Bereich von 0° bis 10° und insbesondere 0° bis 5° als technisch machbar erwiesen.

Um diese axial längenveränderliche Auslegung der benachbarten Rohrsegmente zueinander ebenso umsetzen zu können wie die tangentiale Winkelveränderbarkeit, ist die Breite der Umfangsnut größer als die Breite des Umfangswulstes ausgelegt. Sowohl die Umfangsnut als auch der Umfangswulst sind im Allgemeinen ringförmig ausgebildet. Außerdem wird der ringförmige Umfangswulst des einen Rohrsegmentes unter Krafteinwirkung in die Umfangsnut des benachbarten Rohrsegmentes in Eingriff gebracht, so dass die beiden Rohrsegmente wie beschrieben zueinander axial längenveränderlich ausgelegt sind und sich meistens auch tangential winkelveränderbar zueinander verschieben lassen. Das ist im Detail beispielsweise in der DE 699 11 119 T2 beschrieben.

Darüber hinaus beschreibt die gattungsbildende EP 0 676 840 B1 ein flexibles Schutzrohr, bei welchem der Umfangswulst nicht durchgängig ringförmig ausgebildet ist, sondern sich aus versetzt zueinander angeordneten elastischen, nasenförmigen Haken zusammensetzt. Diese Haken sind für den Eingriff in die Umfangsnut des benachbarten Rohrsegmentes vorgesehen und ausgelegt. Der Vorteil dieser Ausführungsform liegt darin, dass sich einzelne Rohrsegmente nicht nur miteinander relativ problemlos verbinden lassen, sondern auch eine Trennung einzelner Rohrsegmente voneinander möglich ist, auch auf einer Baustelle. Das lässt sich auf das Zusammenspiel der mehreren Haken einerseits und der die Haken aufnehmenden Umfangsnut andererseits zurückführen.

Auf diese Weise wird die Montage erleichtert und insgesamt ein flexibles Schutzrohr zur Verfügung gestellt, welches ganz individuell - auch noch am Verlegeort - an die tatsächlichen Anforderungen angepasst werden kann. Das stellt einen Vorteil gegenüber der prinzipiell in der Praxis auch verfolgten Möglichkeit dar, ein gerades und starres Schutzrohr durch Wärmeeinwirkung in die gewünschte Form zu biegen. Aus diesem Grund haben sich flexible Schutzrohre entsprechend der EP 0 676 840 B1 zunehmend in der Praxis als günstig erwiesen und damit durchgesetzt.

Allerdings besteht bei den bekannten Schutzrohren ein Dichtigkeits- und Festigkeitsproblem. Tatsächlich sorgen im Rahmen der DE 699 11 119 T2 der Umfangswulst und die Umfangsnut mit ihren aneinander anliegenden Auflageflächen für eine dichte Verbindung oder sollen dies tun. Bei der EP 0 676 840 B1 ist hierzu eine Umfangsdichtung vorgesehen, bei welcher es sich um einen simplen O-Ring handelt.

Sobald bei den Ausführungsformen nach dem Stand der Technik benachbarte Rohrsegmente in ihrem Winkel zueinander verändert werden, führt dies bei der Lehre nach der EP 0 676 840 B1 dazu, dass die fragliche O-Ringdichtung mehr oder minder unkontrolliert komprimiert wird. Bei der Lehre nach der DE 699 11 119 T2 führt dieser Vorgang, also eine Winkeländerung der Rohrsegmente zueinander, nicht nur zu Dichtungsproblemen, sondern kann auch darin münden, dass die Rohrsegmente aufbrechen bzw. sich voneinander lösen. Vergleichbare Probleme können auch bei der Lehre nach der EP 0 676 840 B1 ab einem bestimmten Winkel auftreten. Das heißt, die bisherigen flexiblen Schutzrohre weisen einerseits Dichtungsprobleme auf und sind andererseits nur begrenzt geeignet, insbesondere enge Kurvenradien darstellen zu können, da ansonsten ihre Verbindung zueinander aufbricht oder aufbrechen kann. Hier setzt die Erfindung ein.

Der Erfindung liegt das technische Problem zugrunde, ein derartiges flexibles Schutzrohr so weiterzuentwickeln, dass auch enge Kurvenradien realisiert werden können, ohne dass sich die einzelnen Rohrsegmente voneinander lösen und zugleich etwaige Dichtungsprobleme beherrscht werden.

Zur Lösung dieser technischen Problemstellung ist erfindungsgemäß ein gattungsgemäßes flexibles Schutzrohr dadurch gekennzeichnet, dass der Haken am jeweiligen Rohrsegment mit einem Hinterschnitt für den darin eingreifenden Anschlag ausgerüstet ist.

Erfindungsgemäß ist also zunächst einmal jedes Rohrsegment mit dem Anschlag einerseits und den mehreren Haken andererseits ausgerüstet. Die Haken am betreffenden Rohrsegment übergreifen den Anschlag am benachbarten sowie hiermit durch meistens Ineinanderstecken verbundenen weiteren Rohrsegment. Dadurch werden die beiden Rohrsegmente lösbar miteinander gekoppelt, weil die Haken meistens flexibel ausgelegt sind.

Tatsächlich sind die Rohrsegmente typischerweise aus Kunststoff und vorzugsweise einstückig gefertigt, so dass auch die Haken aus Kunststoff bestehen und folglich die erforderliche Flexibilität aufweisen, um im Bedarfsfall vom Anschlag gelöst werden zu können. Dazu muss der jeweilige Haken lediglich aufgebogen und von dem Anschlag entfernt werden. Jedenfalls werden die einzelnen Rohrsegmente durch Ineinanderstecken lösbar miteinander verbunden, weil hierzu die flexiblen Haken an dem betreffenden Rohrsegment den Anschlag am benachbarten Rohrsegment lösbar übergreifen.

Nach vorteilhafter Ausgestaltung sind meistens mehrere über den Umfang des jeweiligen Rohrsegmentes verteilt angeordnete Haken vorgesehen. Im Regelfall sind die Haken äquidistant, das heißt gleich beabstandet, zueinander über den Umfang des betreffenden Rohrsegmentes vorgesehen. Dabei kann beispielsweise mit zwei, drei oder noch mehr Haken gearbeitet werden. Erfindungsgemäß haben sich fünf Haken als besonders günstig erwiesen.

Da die Rohrsegmente meistens zylinderförmig gestaltet sind, verfügen auch die Haken über eine entsprechend angepasste Form. Tatsächlich handelt es sich bei den Haken typischerweise um Kreisbogensegmente. Dadurch, dass die Haken nicht durchgängig über den Umfang verlaufen, sondern äquidistant zueinander angeordnet sind und zwischen sich Zwischenräume definieren, können die einzelnen Haken beispielsweise mit einem Werkzeug aufgrund ihres flexiblen Charakters verformt und von dem betreffenden Anschlag und folglich auch von der Umfangsnut wie beschrieben gelöst werden.

Bei dem Anschlag handelt es sich typischerweise um einen Anschlagring. Während die Haken im Regelfall kopfseitig des Rohrsegmentes angeordnet sind, findet sich der Anschlag bzw. Anschlagring meistens fußseitig. Tatsächlich ist der Anschlag bzw. Anschlagring vorteilhaft an einem Stutzen des jeweiligen Rohrsegmentes vorgesehen, welcher in einen üblicherweise tonnenförmigen Bereich des benachbarten Rohrsegmentes eingesteckt wird. Dadurch können die über den Umfang verteilt angeordneten Haken des betreffenden Rohrsegmentes den Anschlag bzw. Anschlagring am Stutzen des benachbarten und hiermit zu verbindenden Rohrsegmentes kopfseitig des tonnenförmigen Bereiches lösbar übergreifen.

Erfindungsgemäß ist nun der jeweilige Haken an dem betreffenden Rohrsegment mit einem Hinterschnitt für den darin eingreifenden Anschlag ausgerüstet. Da der jeweilige Haken nach vorteilhafter Ausgestaltung mit einem Hinterschnitt ins Rohrinnere gerichtet ist, während der Anschlag zum Rohräußeren hin weist, sorgt der Hinterschnitt am Haken dafür, dass der mithilfe des Hakens übergriffene Anschlag gleichsam in dem Hinterschnitt festgekrallt wird. Auf diese Weise wird eine besonders innige Verbindung zwischen dem jeweiligen Haken und dem Anschlag respektive dem Anschlagring zur Verfügung gestellt.

Der Hinterschnitt am Haken stellt in diesem Zusammenhang sicher, dass auch relativ große tangentiale Winkel zwischen den lösbar miteinander gekoppelten Rohrsegmenten bei dem erfindungsgemäßen flexiblen Schutzrohr abgebildet werden können, ohne dass die Gefahr besteht, dass sich die miteinander gekoppelten Rohrsegmente voneinander lösen. Denn hierzu ist es nicht nur erforderlich, dass der (flexible) Haken von dem Anschlag bzw. Anschlagring abgehoben wird. Denn durch den zusätzlichen Hinterschnitt erfordert das Lösen zugleich auch eine Axialbewegung der Rohrsegmente zueinander, damit der Anschlag den Hinterschnitt am Haken verlassen kann.

Jedenfalls sorgen die erfindungsgemäßen Haken mit dem Hinterschnitt aufgrund ihres krallenartigen Charakters dafür, dass eine besonders innige Verbindung zwischen den ineinandergesteckten Rohrsegmenten beobachtet wird. Außerdem ist diese Verbindung im Vergleich zum Stand der Technik in der Lage, insbesondere große Winkel einer Schrägstellung benachbarter Rohrsegmente aufnehmen zu können. Dadurch lassen sich gefahrlos auch besonders enge Kurvenradien mithilfe des erfindungsgemäßen flexiblen Schutzrohres realisieren, und zwar ohne dass ein Aufbrechen der Verbindung zwischen den einzelnen Rohrsegmenten befürchtet werden muss. Als Folge hiervon treten dann natürlich auch die beim Stand der Technik beobachteten Dichtungsprobleme nicht oder praktisch nicht (mehr) auf.

Nach vorteilhafter Ausgestaltung ist der Anschlag am benachbarten Rohrsegment ebenfalls mit einem Hinterschnitt für den Haken ausgerüstet. Dabei wird man meistens so vorgehen, dass der Hinterschnitt des Hakens und der Hinterschnitt des Anschlages aneinander angepasst sind. Meistens entsprechen sich der Hinterschnitt des Hakens und der Hinterschnitt des Anschlages im Wesentlichen.

Erfindungsgemäß korrespondiert der Hinterschnitt im Regelfall jeweils zu einem mit einer Einsteckrichtung eingeschlossenen Winkel. Die Einsteckrichtung markiert die Richtung, in welcher die einzelnen Rohrsegmente ineinandergesteckt und gleichsam miteinander verkeilt bzw. verrastet werden. Das geschieht dadurch, dass die Haken des betreffenden Rohrsegmentes den Anschlag am benachbarten Rohrsegment lösbar übergreifen, wie dies zuvor bereits beschrieben wurde. Jedenfalls stellt sich der Hinterschnitt jeweils so dar, dass hiermit im Rahmen der Erfindung und nach vorteilhafter Ausgestaltung ein Winkel gemeint ist, der mit der Einsteckrichtung eingeschlossen wird. Das gilt sowohl für den Hinterschnitt am Haken als auch für den Hinterschnitt am Anschlag bzw. Anschlagring.

Um eine besonders innige und aufbruchfreie Verbindung zu realisieren, hat es sich bewährt, wenn der betreffende Winkel des Hinterschnittes Werte von ca. 50° bis ca. 80° einnimmt. Insbesondere haben sich Werte des fraglichen Winkels für den Hinterschnitt von etwa 60° bis 80° als besonders günstig erwiesen. Ganz besonders bevorzugt ist es, wenn der jeweilige Winkel des Hinterschnittes im Bereich von etwa 70° angesiedelt ist. Durch die Anpassung der Hinterschnitte von einerseits dem Anschlag und andererseits dem Haken aneinander wird erreicht, dass die jeweiligen Schenkel der Winkel des Hinterschnittes aneinander anliegen. Denn der Winkel des Hinterschnittes am Haken ist wie dieser nach innen gerichtet bzw. geöffnet. Demgegenüber verfügt der Hinterschnitt am Anschlag - wie dieser - über eine Orientierung und folglich Öffnung nach außen.

Zugleich sorgt diese Bemessungsregel dafür, dass der Haken mit seinem hinterschnittenen Bereich formschlüssig oder nahezu formschlüssig in die durch den Hinterschnitt am Anschlag gebildete hinterschnittene Fuge eingreift. Durch das Zusammenspiel zwischen dem hinterschnittenen Bereich und der hinterschnittenen Fuge und ihren Formschluss oder nahezu Formschluss erklärt sich die besonders innige und krallenartige Verbindung und zwischen den benachbarten Rohrsegmenten bei dem erfindungsgemäßen flexiblen Schutzrohr. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: das erfindungsgemäße flexible Schutzrohr im Schnitt in einer Übersicht, und zwar einen Schnitt A-A durch den Gegenstand nach Fig. 3,
- Fig. 2: ein einzelnes Rohr im Längsschnitt,
- Fig. 3: eine Frontansicht des jeweiligen Rohrsegmentes und
- Fig. 4: einen vergrößerten Ausschnitt aus der Fig. 1 im Bereich der ineinandergesteckten Rohrsegmente,
- Fig. 5: den Gegenstand nach der Fig. 2 in weiterer Detaillierung sowie geringfügig abgewandelt und
- Fig. 6: das erfindungsgemäße flexible Schutzrohr bei der Definition eines engen Kurvenradius.

In den Figuren ist ein flexibles Schutzrohr dargestellt. Das Schutzrohr setzt sich aus mehreren ineinandergesteckten Rohrsegmenten 1 zusammen. Das jeweilige Rohrsegment 1 ist regelmäßig aus Kunststoff gefertigt. Tatsächlich handelt es sich typischerweise um ein Kunststoffspritzgussteil aus PE (Polyethylen), PP (Polypropylen) oder einem vergleichbaren Kunststoff.

Man erkennt, dass sich das jeweilige Rohrsegment 1 aus einem tonnenförmigen Bereich 1a und einem daran in Einsteckrichtung E anschließenden zylindrischen Bereich respektive Stutzen 1b zusammensetzt. Die Einsteckrichtung E markiert dabei die Richtung, in welcher die einzelnen Rohrsegmente 1 ineinandergesteckt werden, um das dargestellte und gewünschte flexible Schutzrohr zu definieren.

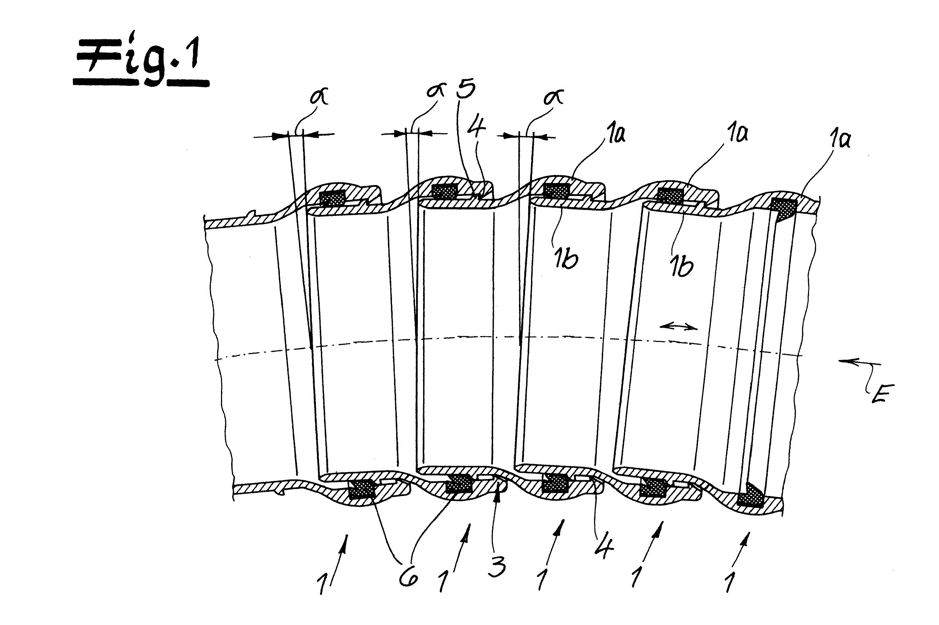

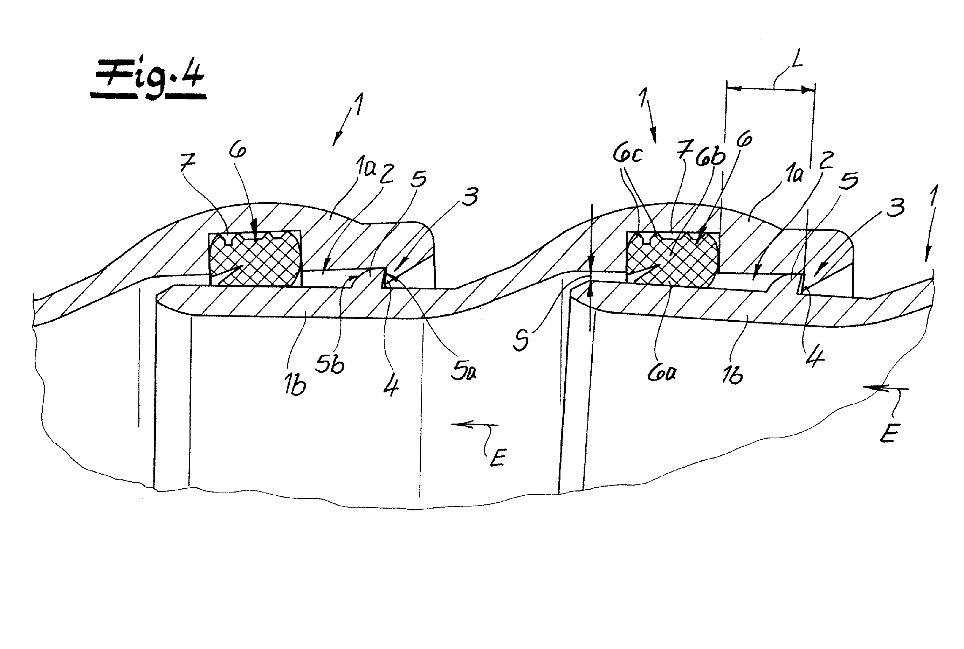

Der jeweils tonnenförmige Bereich 1a des Rohrsegmentes 1 stellt sicher, dass benachbarte Rohrsegmente 1 zueinander tangential veränderbar ausgebildet sind bzw. ausgerichtet werden können. Tatsächlich werden in diesem Zusammenhang Winkel α für eine Schrägstellung benachbarter Rohrsegmente 1 zueinander beobachtet, die im Bereich von ca. 3° oder mehr angesiedelt sind. Das heißt, das jeweilige Rohrsegment 1 lässt sich im Vergleich zum benachbarten Rohrsegment 1 tangential verschieben, wie die Fig. 1 bzw. die Fig. 4 deutlich macht. Bei diesem Vorgang kommt es dazu, dass die jeweils benachbarten Rohrsegmente 1 den fraglichen Winkel α ihrer Schrägstellung zueinander einschließen.

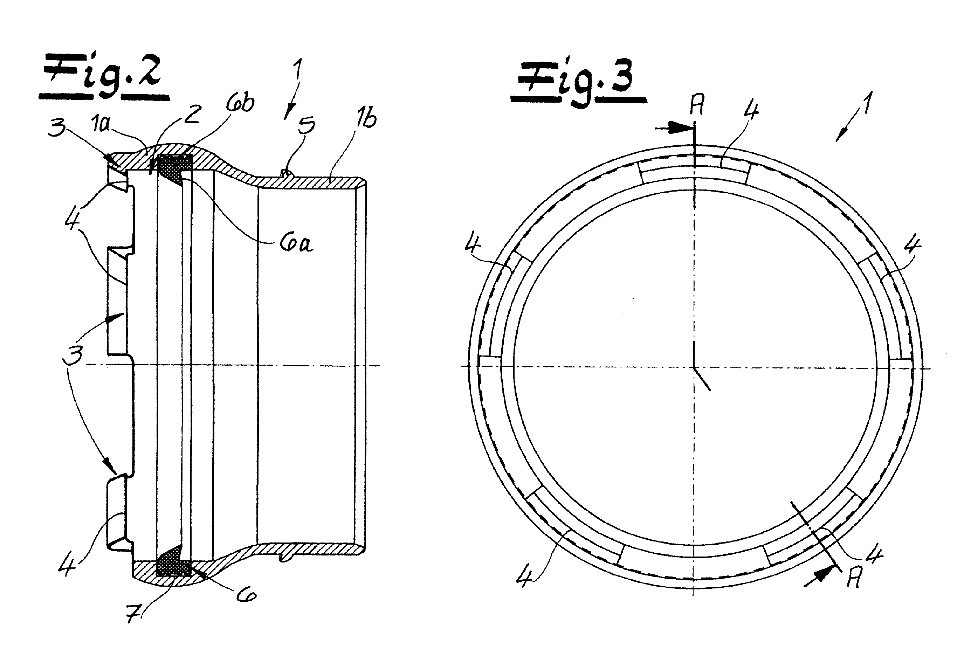

Darüber hinaus können die Rohrsegmente 1 zueinander axial in ihrer Länge verändert werden. Im Ausführungsbeispiel fällt die Axialrichtung mit der Einsteckrichtung E zusammen. Für das beschriebene Winkelspiel und auch die Längenveränderbarkeit sorgt vorliegend der Umstand, dass jedes Rohrsegment 1 mit einer Umfangsnut 2 und einem Umfangswulst 3 sowie einem Anschlag 5 ausgerüstet ist. Im Ausführungsbeispiel ist die Umfangsnut 2 ringförmig ausgelegt. Demgegenüber verfügt der jeweilige Umfangswulst 3 nicht über eine durchgängige ringförmige Gestaltung, sondern setzt sich aus äquidistant über den Umfang des jeweiligen Rohrsegmentes 1 angeordneten Haken 4 zusammen. Anhand der Fig. 3 erkennt man, dass im Ausführungsbeispiel und nicht einschränkend fünf Haken 4 realisiert sind, die jeweils im Winkelabstand von 72° über den Umfang des jeweiligen Rohrsegmentes 1 angeordnet sind.

Beim Ineinanderstecken der jeweiligen Rohrsegmente 1 übergreifen die Haken 4 bzw. übergreift der Umfangswulst 3 an dem einen Rohrsegment 1 den Anschlag 5 am benachbarten und ineinandergesteckten Rohrsegment 1. Der Anschlag 5 taucht dabei in die Umfangsnut 2 ein. Dabei ist die Auslegung so getroffen, dass der Anschlag 5 für die Haken 4 axial in der Umfangsnut 2 des benachbarten übergreifenden Rohrsegmentes 1 beweglich ist, und zwar zwischen zwei Begrenzungsanschlägen 3 bzw. 4 und 6.

Das heißt, das jeweilige Rohrsegment 1 ist sowohl mit den mehreren Haken 4 als auch dem Anschlag 5 ausgerüstet, der typischerweise einen Anschlagring 5 darstellt. Um nun die einzelnen Rohrsegmente 1 lösbar miteinander zu koppeln, werden die Rohrsegmente 1 dadurch zusammengesteckt, dass der Stutzen bzw. zylindrische Bereich 1 b des betreffenden Rohrsegmentes 1 in den tonnenförmigen Bereich 1a des benachbarten Rohrsegmentes 1 eingesteckt wird. Hierbei übergreifen die Haken 4 des betreffenden Rohrsegmentes 1 den Anschlag bzw. Anschlagring 5 am benachbarten Rohrsegment 1. Das ist möglich, weil die Haken 5 ebenso wie das gesamte Rohrsegment 1 aus Kunststoff hergestellt sind und folglich über die nötige Flexibilität verfügen.

Man erkennt, dass zusätzlich noch eine Umfangsdichtung 6 vorgesehen ist, die in die Umfangsnut 2 im Ausführungsbeispiel eingelassen ist. Tatsächlich wird die Umfangsdichtung 6 in einer Dichtungsnut 7 aufgenommen. Außerdem fungiert die Umfangsdichtung 6 als ein Begrenzungsanschlag 6 für den Anschlag bzw. Ringanschlag 5. Als anderer bzw. weiterer Begrenzungsanschlag 3 bzw. 4 fungiert der Umfangswulst bzw. fungieren die einzelnen Haken 4. Dadurch lässt sich der Anschlag respektive Ringanschlag 5 des eingesteckten Rohrsegmentes 1 in der Umfangsnut 2 des benachbarten übergreifenden Rohrsegmentes 1 unter Berücksichtigung des in der Fig. 4 angedeuteten axialen Spiels L in Axialrichtung bzw. Einsteckrichtung E hin- und her bewegen. Als Folge hiervon wird die gewünschte Winkelbeweglichkeit der Rohrsegmente 1 zueinander ebenso erreicht und umgesetzt wie deren Axialbeweglichkeit.

Anhand der gesamten Figuren wird deutlich, dass die Umfangsdichtung 6 im Ausführungsbeispiel und nach besonderer Bedeutung für die Erfindung als Formänderungsdichtung 6 ausgebildet ist. Tatsächlich verfügt die Umfangsdichtung bzw. Formänderungsdichtung 6 über einen formveränderlichen Fortsatz 6a, welcher beim Ineinanderstecken benachbarter Rohrsegmente 2 auf Biegung beansprucht wird, wie insbesondere die unterschiedlichen Stellungen der einzelnen Rohrsegmente 1 in der Detailvergrößerung nach Fig. 4 deutlich machen. Neben dem formveränderlichen Fortsatz 6a weist die Umfangsdichtung 6 eine den Fortsatz 6a tragende Basis 6b auf. Außerdem ist die Basis 6b mithilfe fußseitiger Rippen 6c am Grund der bereits angesprochenen Dichtungsnut 7 abgestützt.

Die Umfangsdichtung 6 ist vorliegend als kombinierte Formänderungs- sowie Kompressionsdichtung ausgelegt. Tatsächlich handelt es sich bei der Umfangsdichtung 6 um eine Lippendichtung. Außerdem ist die Umfangsdichtung 6 aus einem elastomeren Kunststoff hergestellt. Die Umfangsdichtung 6 wird in der Dichtungsnut 7 aufgenommen und kragt mit dem formveränderlichen Fortsatz 6a bzw. der Lippe 6a über einen Rand der Dichtungsnut 7 vor, wie insbesondere die Fig. 4 deutlich macht.

Sobald in ein vorhandenes Rohrsegment 1 ein benachbartes Rohrsegment 1 eingesteckt wird, erfährt der Fortsatz 6a bzw. die Lippe 6a der Umfangsdichtung 6 eine mechanische Beaufschlagung, und zwar auf Biegung. Tatsächlich wird die fragliche Umfangsdichtung 6 bzw. deren Fortsatz 6a in der Einsteckrichtung E auf Biegung beansprucht bzw. verformt. Auf diese Weise ist die Umfangsdichtung 6 mit ihrer Lippe bzw. dem Fortsatz 6a in der Lage, auch relativ große Spalte S zwischen den ineinandergesteckten Rohrsegmenten 1 überbrücken und abdichten zu können. Dadurch lassen sich die zuvor bereits beschriebenen Winkelbeweglichkeiten bzw. lässt sich der eingangs beschriebene Schrägwinkel α realisieren und umsetzen.

Bei dem Dichtungsvorgang wird nicht nur die Lippe bzw. der Fortsatz 6a der Umfangsdichtung 6 verformt bzw. erfährt eine Formänderung im Querschnitt, sondern werden zugleich auch die fußseitigen Rippen 6c an der Basis 6b der Umfangsdichtung 6 komprimiert. Dadurch handelt es sich bei der Umfangsdichtung 6 um eine kombinierte Formänderungs- sowie Kompressionsdichtung. Die Umfangsdichtung 6 selbst ist typischerweise aus einem elastomeren Kunststoff wie beispielsweise EPDM (Etylen-Propylen-Dien-Kautschuk), SBR (StyrolButadien-Kautschuk) oder NBR (Acrylnitril-Butadien-Kautschuk) hergestellt. Das gilt selbstverständlich nur beispielhaft und nicht einschränkend.

Die vergrößerte Darstellung in der Fig. 4 macht darüber hinaus deutlich, dass der Anschlag bzw. Ringanschlag 5 an seiner Frontseite im Vergleich zur Einsteckrichtung E über eine gerade Kante 5a verfügt. An der in Einsteckrichtung E rückwärtigen Seite bzw. Rückseite des Anschlages respektive Ringanschlages 5 ist demgegenüber eine abgerundete Kante 5b zu erkennen, und zwar jeweils im Querschnitt. Da der Anschlag bzw. Ringanschlag 5 des eingesteckten Rohrsegmentes 1 innerhalb der Umfangsnut 2 an dem übergreifenden Rohrsegment 1 in der Axialrichtung hin- und her bewegt werden kann, wechselwirkt der Anschlag 5 einerseits mit dem Umfangswulst 3 des benachbarten Rohrsegmentes 1 und andererseits mit der Umfangsdichtung 6 des benachbarten sowie übergreifenden Rohrsegmentes 1. Tatsächlich fungieren die Dichtung 6 einerseits und der Umfangswulst 3 respektive die Haken 4 andererseits als jeweilige Begrenzungsanschläge 3, 4 bzw. 6 für diese Beweglichkeit der einzelnen Rohrsegmente 1 zueinander.

Bei einem etwaigen mechanischen Kontakt des Anschlages bzw. Ringanschlages 5 mit der Umfangsdichtung 6 kommt die abgerundete Kante 5b des Anschlages 5 mit einer abgebogenen Kante des in der Einsteckrichtung E abgebogenen Fortsatzes 6a der Umfangsdichtung 6 in Wechselwirkung. Die beiden jeweils abgerundeten Kanten sorgen dafür, dass bei diesem Vorgang die Umfangsdichtung 6 insgesamt nicht beschädigt wird, gleichzeitig aber ihrer Funktion als Begrenzungsanschlag wie beschrieben nachkommt.

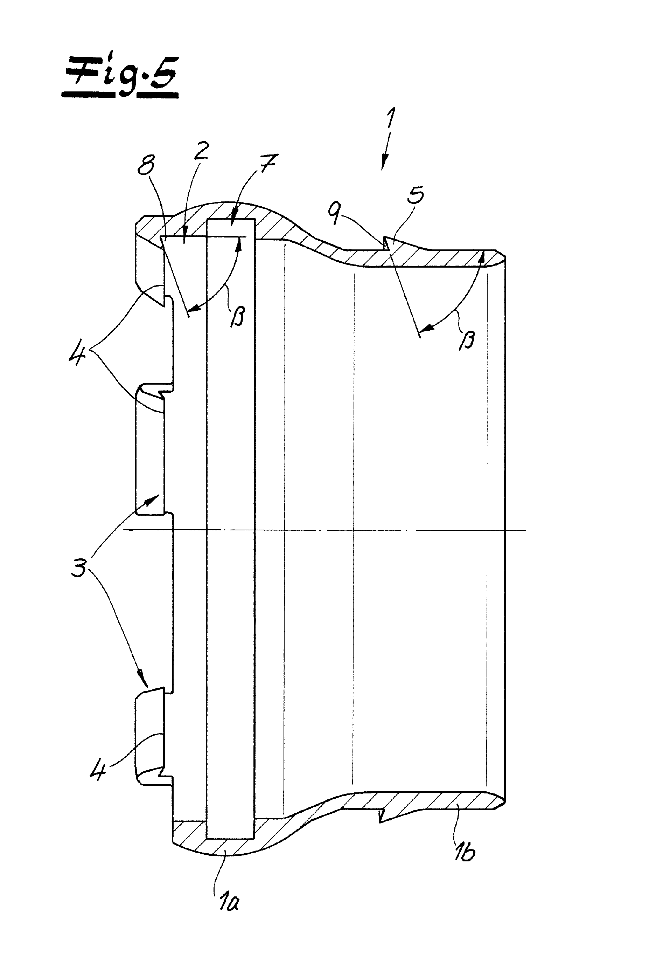

In der Detaildarstellung nach Fig. 5 und im Rahmen der dortigen Abwandlung erkennt man, dass im Rahmen der Erfindung der jeweilige Haken 4 mit einem Hinterschnitt β ausgerüstet ist. Im Ausführungsbeispiel und nicht einschränkend verfügt auch der Anschlag 5 über einen Hinterschnitt β. Der Hinterschnitt β des Hakens 4 und der Hinterschnitt β des Anschlages 5 sind aneinander angepasst. Tatsächlich entsprechen sich beide Hinterschnitte β des Hakens 4 und des Anschlages 5. Bei dem Hinterschnitt β handelt es sich im Ausführungsbeispiel um jeweils einen Winkel β, welcher von dem fraglichen Hinterschnitt im Vergleich zu der Einsteckrichtung E eingeschlossen wird.

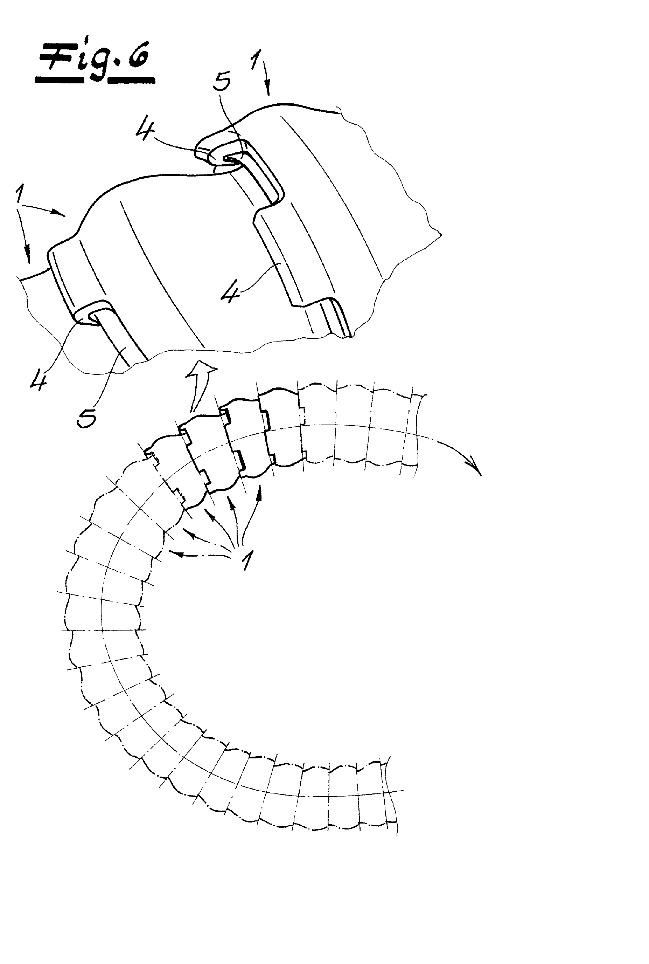

Nach dem Ausführungsbeispiel erkennt man, dass der jeweilige Hinterschnitt β des Hakens 4 ebenso wie der Hinterschnitt β des Anschlages 5 jeweils Werte im Bereich von in etwa 70° annimmt. Durch die Anpassung der beiden Hinterschnitte β aneinander wird erreicht, dass bei miteinander verbundenen benachbarten Rohrsegmenten 1 ein hinterschnittener Bereich 8 am Haken 4 in eine hinterschnittene Fuge oder Nut 9 am Anschlag 5 beim Ineinanderstecken der benachbarten Rohrsegmente 1 eingreift. Tatsächlich beobachtet man durch die Anpassung der Hinterschnitte β von einerseits dem Haken 4 und andererseits dem Anschlag 5 aneinander, dass der hinterschnittene Bereich 8 und die hinterschnittene Fuge oder Nut 9 einen Formschluss oder nahezu Formschluss eingehen. Dadurch werden die beiden Rohrsegmente 1 besonders innig miteinander verkrallt, wie dies einleitend bereits beschrieben worden ist. Als Folge hiervon können enge Kurvenradien mithilfe der Rohrsegmente 1 und folglich des flexiblen Schutzrohres beschrieben werden, wie sie beispielhaft in der Fig. 6 zu erkennen sind.

Das gelingt, ohne dass sich die Haken 4 von dem jeweiligen Anschlag respektive Anschlagring 5 lösen oder lösen können. Des Weiteren zeigen die Figuren 5 und 6, dass der jeweilige Haken 4 mit seinem Hinterschnitt β ins Rohrinnere gerichtet ist. Demgegenüber weist der Anschlag bzw. Anschlagring 5 mit seinem Hinterschnitt β eine Ausrichtung zum Rohräußeren hin auf. Außerdem sind die jeweiligen Haken 4 kopfseitig des Rohrsegmentes 1 angeordnet. Tatsächlich finden sich die Haken 4 am äußeren umfangseitigen Ende des tonnenförmigen Bereiches 1a. Demgegenüber ist der Anschlag 5 an dem zylindrischen Bereich bzw. Stutzen 1 b ausgebildet. Hierbei wird ein Abstand des Anschlages 5 vom äußeren Umfangsrand des zylindrischen Bereiches bzw. Stutzens 1b beobachtet, welcher sicherstellt, dass in diesem Bereich die zuvor bereits im Einzelnen beschriebene Umfangsnut 2 ausgebildet werden kann und auch der erforderliche Raum für die Dichtungsnut 7 und die darin gehaltene Umfangsdichtung 6 zur Verfügung steht.

Das dargestellte und zuvor im Detail beschriebene flexible Schutzrohr kann an einem oder beiden Enden mit beispielsweise Verbindungsstücken zur Kopplung mit beispielsweise einem starren Schutzrohr ausgerüstet sein. Beispielsweise mag ein Ende mit einer Muffe und das andere Ende mit einem korrespondierenden Spitzendstück ausgerüstet werden. Das ist im Detail jedoch nicht dargestellt.

## Patentansprüche

1. Flexibles Schutzrohr, insbesondere Kabelschutzrohr, mit mehreren ineinandergesteckten Rohrsegmenten (1), wobei die Rohrsegmente (1) zueinander axial längenveränderlich und/oder tangential winkelveränderbar ausgebildet sind, wobei ferner jedes Rohrsegment (1) einen Umfangswulst (3) sowie einen Anschlag (5) aufweist, und wobei sich der Umfangswulst (3) des jeweiligen Rohrsegmentes (1) aus mehreren Haken (4) zusammensetzt, welche den Anschlag (5) am benachbarten Rohrsegment (1) übergreifen, **dadurch gekennzeichnet, dass** der Haken (4) mit einem Hinterschnitt (β) für den darin eingreifenden Anschlag (5) ausgerüstet ist.

2. Schutzrohr nach Anspruch 1, **dadurch gekennzeichnet, dass** der Anschlag (5) am benachbarten Rohrsegment (1) ebenfalls mit einem Hinterschnitt (β) für den Haken (4) ausgerüstet ist.

3. Schutzrohr nach Anspruch 1 oder 2, **dadurch gekennzeichnet, dass** der Hinterschnitt (β) des Hakens (4) und der Hinterschnitt (β) des Anschlages (5) aneinander angepasst sind.

4. Schutzrohr nach einem der Ansprüche 1 bis 3, **dadurch gekennzeichnet, dass** sich der Hinterschnitt (β) des Hakens (4) und der Hinterschnitt (β) des Anschlages (5) einander im Wesentlichen entsprechen.

5. Schutzrohr nach einem der Ansprüche 1 bis 4, **dadurch gekennzeichnet, dass** der Hinterschnitt (β) jeweils zu einem mit einer Einsteckrichtung (E) eingeschlossenen Winkel (β) korrespondiert.

6. Schutzrohr nach Anspruch 5, **dadurch gekennzeichnet, dass** der Winkel (β) Werte von ca. 50° bis ca. 80°, insbesondere von etwa 60° bis 80° und vorzugsweise von ca. 70° annimmt.

7. Schutzrohr nach einem der Ansprüche 1 bis 6, **dadurch gekennzeichnet, dass** der jeweilige Haken (4) mit seinem Hinterschnitt (β) ins Rohrinnere und der Anschlages (5) mit seinem Hinterschnitt (β) zum Rohräußeren hin gerichtet ist.

8. Schutzrohr nach einem der Ansprüche 1 bis 7, **dadurch gekennzeichnet, dass** jedes Rohrsegment (1) mit mehreren über den Umfang verteilt angeordnet Haken (4) ausgerüstet ist.

9. Schutzrohr nach einem der Ansprüche 1 bis 8, **dadurch gekennzeichnet, dass** der jeweilige Haken (4) kopfseitig des Rohrsegmentes (1) angeordnet ist.

10. Schutzrohr nach einem der Ansprüche 1 bis 9, **dadurch gekennzeichnet, dass** der Anschlag (5) als fußseitig des Rohrsegmentes (1) vorgesehener Anschlagring (5) ausgebildet ist.
